# EUROPÄISCHE PATENTSCHRIFT

(11) **EP 3 292 590 B1**
(45) Veröffentlichungstag und Bekanntmachung des Hinweises auf die Patenterteilung: **07.08.2024**
(21) Anmeldenummer: 16715442.6
(22) Anmeldetag: 10.03.2016
(51) Int. Cl.: H01R 4/24, H02K 5/22

(54) **VERFAHREN ZUR HERSTELLUNG EINES STATORS UND ELEKTRONISCH KOMMUTIERTER GLEICHSTROMMOTOR**
METHOD OF MANUFACTURING A STATOR AND ELECTRONICALLY COMMUTATED DC MOTOR
PROCÉDÉ DE FABRICATION D'UN STATOR ET MOTEUR À COURANT CONTINU À COMMUTATION ÉLECTRONIQUE

(30) Priorität: 04.05.2015 DE 102015208209
(43) Veröffentlichungstag der Anmeldung: 14.03.2018
(73) Patentinhaber: Bühler Motor GmbH, 90459 Nürnberg (DE)
(72) Erfinder: BRETTSCHNEIDER, Jürgen, 90482 Nürnberg (DE); CHEMNITZ, Norbert, 90455 Nürnberg (DE)
(86) Internationale Anmeldenummer: PCT/DE2016/200129
(87) Internationale Veröffentlichungsnummer: WO 2016/177365

(56) Entgegenhaltungen:
- EP-A1- 1 247 322
- EP-A1- 1 422 808
- EP-A1- 1 722 464
- DE-A1- 102012 214 088
- DE-A1- 102014 113 650
- US-A- 4 132 460
- US-A1- 2005 118 886
- US-A1- 2014 015 357

## Beschreibung

Die Erfindung betrifft ein Verfahren zur Herstellung eines Stators (1) eines elektronisch kommutierten Gleichstrommotors mit einem mehrphasigen Stator (1) und einem Innenrotor, wobei der Stator (1) einen geschlossenen Rückschlussring (2) und eine Vielzahl von mit diesem einstückigen, nach innen gerichteten Statorpolen (3) und einen Isolierstoffkörper (4) mit einem sich radial über den Statoraußendurchmesser erstreckenden Anschlussmittel (5) für einen Wicklungsdraht (6) aufweist, wobei das Anschlussmittel (5) nicht einstückig mit dem Isolierstoffkörper (4) ist, sondern an einem mit dem Isolierstoffkörper (4) einstückigen Haltemittel (7) montiert ist.

Die Erfindung betrifft zudem einen elektronisch kommutierten Gleichstrommotor mit einem mehrphasigen Stator (1) und einem Innenrotor, wobei der Stator (1) einen geschlossenen Rückschlussring (2) und eine Vielzahl von mit diesem einstückigen, nach innen gerichteten Statorpolen (3) und einen Isolierstoffkörper (4) mit einem sich radial über den Statoraußendurchmesser erstreckenden Anschlussmittel (5) für einen Wicklungsdraht (6) aufweist, wobei das Anschlussmittel (5) nicht einstückig mit dem Isolierstoffkörper (4) ist, sondern an einem mit dem Isolierstoffkörper (4) einstückigen Haltemittel (7) montiert ist, wobei das Anschlussmittel (5) schlitzartige Drahtaufnahmen (10) aufweist, in welchen die darin aufgenommenen Wicklungsdrähte (6) sich nicht verklemmen können, wobei das Anschlussmittel (5) rechtwinklig zu den Drahtaufnahmen (10) ausgerichtete Aufnahmeschächte (11) für Schneid-Klemm-Kontakte (9), Schweiß- oder Lötkontakte aufweist und das Haltemittel (7) eine Führung (12) aufweist, welche mit einer Gegenkontur (13) am Anschlussmittel (5) korrespondiert.

Elektronisch kommutierte Gleichstrommotoren mit nach innen gerichteten Polen werden je nach Anforderung auf unterschiedliche Weise hergestellt. Sollen kurze Prozesszeiten erreicht werden, eignet sich z. B. ein Einzelpolwickelverfahren, bei dem die Pole auf wirtschaftliche Weise in Gruppen gleichzeitig von außen bewickelt und anschließend zu einem Stator zusammengesetzt und gefügt werden. Jede Grenzfläche zwischen den einzelnen Polen bildet dabei einen magnetischen Widerstand. Die Summe dieser Widerstände verringert den Gesamtwirkungsgrad des Gleichstrommotors. Daher wird dieses Verfahren nicht bei hohen Anforderungen an den Wirkungsgrad verwendet. Hierfür wählt man besser Innenwickelverfahren, wie das Nadelwickeln. Nachteilig beim Nadelwickelverfahren ist jedoch ein relativ großer Bauraumbedarf für die Wickelnadel selbst, die sich einerseits zwischen den Polen bewegen muss und andererseits auch beim Verlegen der Wicklungsdrähte zwischen Drahtführungsmitteln geführt werden muss. Weiter ist es beim Nadelwickeln, insbesondere beim Anschließen der Wicklungsdrähte an Anschlussmitteln je nach Anschlussart erforderlich den Wicklungsdraht achsparallel zu fügen oder zu verlegen, wobei der Draht axial so gesichert sein muss, dass er nicht aus bereits verlegten Abschnitten, z. B. an Umlenkgeometrien herausrutscht. Um dies zu vermeiden sind in der Regel Hinterschnitte an den Umlenkgeometrien vorgesehen. Diese Geometrien erfordern deutlich aufwändigere Spritzgusswerkzeuge mit seitlichen Schiebern. Die Abstände zu den Anschlussstellen müssen auch deshalb relativ groß sein, weil dadurch größere Biegeradien für den Wicklungsdraht möglich sind. Bei zu kleinem Biegeradius lässt sich der Draht häufig nicht über eine Anschlussgeometrie führen ohne bleibende Biegeverformungen zu riskieren. Dies kann zu lockeren oder sich lockernden Drahtabschnitten führen, wonach es zu einer Verkürzung der Lebensdauer kommen kann.

Aus der EP 1 722 464 A1 ist ein gattungsgemäßer elektronisch kommutierter Gleichstrommotor bekannt, bei dem die Drähte außen am Isolierstoffkörper verlegt und mit einer radial an dem Isolierstoffkörper anschließenden Kontaktiervorrichtung (Anschlussblock) verbunden werden. Die Wicklung ist dabei so verlegt, dass der Wicklungsdraht vor oder nach der Bewicklung aller einer Phase zugeordneten Statorzähne über ein Kontaktierelement der Kontaktiervorrichtung geführt ist. Der Wicklungsdraht ist jeweils im Bereich des Rückschlusses außen auf dem Isolierstoffkörper verlegt. Da dies auch im Bereich der Kontaktiervorrichtung der Fall ist, erstreckt sich die Kontaktiervorrichtung sehr weit radial nach außen und vergrößert hierdurch den Bauraum erheblich.

Aus der US 2014/015357 A1 ist eine elektrische Verbinderanordnung zum Bereitstellen einer elektrischen Verbindung mit Magnetdrahtanschlüssen an Elektromotoren mit Kabelbäumen bekannt, umfassend einen Adapter zum Verbinden von Magnetdrähten mit einem Kabelbaum. Ein erstes Gehäuse (10) des Adapters ist an einem Motorgehäuse (30) befestigt und weist erste Anschlüsse auf, die in Anschlussaufnahmekanälen des ersten Gehäuses befestigt sind und isolationsverdrängende Schlitze und passsende Abschnitte aufweisen, wobei die isolationsverdrängenden Schlitzte zum Aufnehmen von Magnetdrähten konfiguriert sind und die zusammenpassenden Abschnitte so konfiguriert sind, dass sie mit den Kontakten eines am Kabelbaum befestigten kuppelbaren Verbinders zusammen passen. Ein zweites Gehäuse des Adapters weist Kontaktaufnahmekanäle mit Aufnahmeabschnitten auf, die so konfiguriert sind, um die Passteile der ersten Anschlüsse und die Aufnahmekanäle des passenden Verbinders aufzunehmen.

Die US 4 132 460 A offenbart ein elektrisches Anschlussgehäuse, das zur Montage an einem Stator eines Elektromotors vorgesehen ist, umfassend ein Verbindergehäuse mit einem Anschlussgehäuseabschnitt und einer Stabilisierungsrippe, die sich seitlich von einer der Seitenwände des Anschlussgehäuses erstreckt. Das freie Ende der Rippe weist Klemmfinder auf, die so dimensioniert sind, dass sie an Abschnitten der Polelemente des Stators anliegen, wenn sich das Gehäuse an einer Seite des Stators befindet, wobei sich die Rippe nach innen zur Mitte des Stators erstreckt. Die Klemmeinrichtung an dem Ende der Rippe ist derart ausgebildet, dass das Gehäuse sicher an dem Stator montiert werden kann.

Aus der DE 10 2012 214 088 A1 ist ein elektronisch kommutierter Gleichstrommotor mit einem mehrphasigen Stator und einem Innenrotor bekannt, wobei der Stator einen geschlossenen Rückschlussring und eine Vielzahl von mit diesem einstückigen, nach innen gerichteten Statorpolen und einen Isolierstoffkörper mit einem sich radial über den Statoraußendurchmesser erstreckenden Anschlussmittel für einen Wicklungsdraht aufweist.

Die EP 1 422 808 A1 offenbart ein Anschlussmittel, welches einen Befestigungspin für einen Wicklungsdraht umfasst, einen mehrteiligen Isolierstoffkörper, bestehend aus den Teilen 41 und 42 sowie dem Steckermodul, wobei das Steckermodul mittels der Zapfen an den Isolierstoffkörper befestigt ist.

Aus der EP 1 247 322 A1 ist ein Anschlussmittel bekannt, welches nicht mit dem Isolierstoffkörper einstückig ausgeprägt ist, sondern an den, mit dem Isolierstoffkörper einstückig an geformtem Haltemittel montiert ist.

Die DE 10 2014 113 650 A1 offenbart ein Anschlussmittel, welches von einem Isolierstoffkörper aufgenommen werden kann.

Aus der US 2005/118886 A1 ist ein Anschlussmittel bekannt, welches nicht einstückig mit dem Isolierstoffkörper ausgeprägt ist, sondern an dem einstückig mit dem Isolierstoffkörper ausgeprägten Haltemittel montiert wird.

Aufgabe der Erfindung ist es bei einem gattungsgemäßen Gleichstrommotor für eine kompakte Bauform mit geringen axialen und radialen Abmessungen, für einen optimalen Wirkungsgrad auch bei Verwendung eines Nadelwickelverfahrens und für eine einfache Herstellbarkeit zu sorgen.

Diese Aufgabe wird erfindungsgemäß durch die Merkmale des Verfahrensanspruchs 1 und des Vorrichtungsanspruchs 4 gelöst.

Der besondere Vorteil dieses Verfahrens besteht darin, dass während des Wickelvorgangs zunächst keine Verbindung mit dem später am Haltemittel montierten Anschlussmittel vorgenommen werden muss. Hierdurch entfallen Axialbewegungen im radial äußeren Bereich des Stators, in welchem später das Anschlussmittel festgelegt ist. Nachdem der Stator bewickelt ist und die radial nach außen geführten Drahtabschnitte noch im Montagehilfsmittel festgelegt sind, wird das Anschlussmittel durch eine achsparallele Bewegung auf die Drahtabschnitte radial außerhalb des Haltemittels gefügt und anschließend durch eine Radialbewegung auf das Haltemittel und in dessen Führung geschoben. Die Drahtabschnitte werden durch diese Radialbewegung nicht mitbewegt, sondern sie gleiten in den Drahtaufnahmen ähnlich einer Kämmbewegung. Die Verbindung zwischen dem Anschlussmittel und dem Haltemittel kann durch eine leichte Überpressung kraftschlüssig gestaltet sein. Durch das Fügen der Schneid-Klemm-Kontakte in die Aufnahmeschächte werden die Drähte abisoliert und mit den Schneid-Klemm-Kontakten elektrisch verbunden.

Ein Verriegelungslappen, der z. B. Teil eines Gehäusedeckels sein kann, verriegelt nach seiner Montage das Anschlussmittel in seiner Lage am Haltemittel.

Hieraus ergibt sich eine Reihe von Vorteilen. Zunächst besteht für die Wickelnadel mehr Platz um die Drahtenden zu fixieren. Weiter muss die Wickelnadel keine Axialbewegung für eine Fügebewegung mit Anschlussmitteln wie Schneid-Klemm-Kontakten ausführen. Aus diesem Grund sind zum einen keine Rückhaltegeometrien, wie Haken oder Hinterschnitte erforderlich. Dadurch kann das Spritzgusswerkzeug für den Isolierstoffkörper deutlich einfacher und ohne seitliche Schieber ausgeführt sein, wodurch die Herstellung wirtschaftlicher ist. Zum anderen kann der radiale Bauraum verringert werden, da auch für die Axialbewegung Raum zur Verfügung gestellt werden müsste. Das Anschlussmittel weist schlitzartige Drahtaufnahmen auf. Diese sind so dimensioniert, dass der Wicklungsdraht beinahe spielfrei aufgenommen werden kann, aber keine Verklemmung bewirkt. Diese Beweglichkeit ist notwendig, um eine Verschiebung des Anschlussmittels auf das Haltemittel prozesssicher vornehmen zu können.

Das Anschlussmittel ist weiter mit rechtwinklig zu den Drahtaufnahmen ausgerichteten Aufnahmeschächten für Schneid-Klemm-Kontakte geformt. Die Schneid-Klemm-Kontakte können während der Montage kurzzeitig auch als Halte- oder Verliersicherungsmittel für das Anschlussmittel dienen.

Der Formschluss wird durch eine Führung im Haltemittel und einer mit dieser korrespondierenden und passenden Gegenkontur am Anschlussmittel erreicht. Diese Verbindung kann kulissenartig ausgeführt sein.

Weiterbildungen der Erfindung sind in den Unteransprüchen dargestellt. Zweckmäßigerweise ist zwischen dem Anschlussmittel und dem Haltemittel eine formschlüssige Verbindung rechtwinklig zur Fügerichtung vorgesehen. Hierdurch wird eine sichere mechanische Verbindung in achsparalleler Richtung erreicht.

Eine besonders sichere mechanische Verbindung des Anschlussmittels am Haltemittel und damit am Isolierstoffkörper wird dadurch erreicht, dass die Verbindung des Anschlussmittels an dem Haltemittel durch ein Verriegelungsmittel verriegelt ist. Hierdurch entsteht sowohl in achsparalleler als auch in radialer Richtung ein Formschluss.

Eine sehr effektive und die Teileanzahl einschränkende Lösung besteht darin, dass das Verriegelungsmittel an einem ohnehin notwendigen Gehäusedeckel vorhanden ist.

Die Gestaltung des Formwerkzeuges für den Isolierstoffkörper lässt sich wesentlich vereinfachen, indem auf axiale Rückhaltegeometrien an den Drahtführungsmitteln des Isolierstoffkörpers verzichtet wird.

Nach einer besonders bevorzugten Weiterbildung der Erfindung ist vorgesehen, dass zum Umlenken des Wicklungsdrahtes mehrere Drahtführungsmittel in einem Ringbereich des Isolierstoffkörpers, welcher eine axiale Projektion des Rückschlusringes auf den Isolierstoffkörper darstellt und in einem 90°-Winkelsektor, in welchem das Anschlussmittel vollständig enthalten ist, angeordnet und mit dem Isolierstoffkörper einstückig sind. Diese Drahtführungsmittel dienen insbesondere dazu den Wicklungsdraht so platzsparend wie möglich und so optimal wie möglich in eine parallele Anordnung zu bringen, als Voraussetzung für die Montage des Anschlussmittels.

Weitere Umlenkmittel, die radial außerhalb dieses Ringbereiches am Haltemittel des Isolierstoffkörpers vorgesehen sind, tragen ebenfalls wesentlich zur optimalen Anordbarkeit der Wicklungsdrähte bei.

Es hat sich gezeigt, dass eine platzsparende Verlegung des Wicklungsdrahtes insbesondere dadurch erreichbar ist, wenn in dem Winkelsektor der Wicklungsdraht zumindest einmal, bevorzugt zumindest zweimal, nach innen axial vor einen bereits bewickelten Statorpol um ein Drahtführungsmittel geführt ist. Hierdurch wird anderenfalls ungenutzter Bauraum für die optimale Anordnung des Wicklungsdrahtes verwendet.

Dieser Vorteil wird noch weiter ausgenutzt, indem der Wicklungsdraht Zick-Zack-artig um zumindest zwei Drahtführungsmittel herumgelegt ist.

Ein Ausführungsbeispiel der Erfindung wird nachfolgend anhand der Zeichnung näher erläutert. Es zeigen:
- Fig. 1: einen Stator in einer ersten Phase eines Montageprozesses,
- Fig. 2: den Stator in einer zweiten Phase des Montageprozesses,
- Fig. 3: den Stator in einer dritten Phase des Montageprozesses,
- Fig. 4: den bewickelten Stator in einer Axialansicht,
- Fig. 5: den bewickelten Stator in einer Draufsicht,
- Fig. 6: eine Schnittansicht des bewickelten Stators,
- Fig. 7: ein vergrößerter Ausschnitt E aus Fig. 6,
- Fig. 8: eine dreidimensionale Ansicht des bewickelten Stators,
- Fig. 9: eine Einzelteildarstellung eines Anschlussmittels,
- Fig. 10: eine Seitenansicht des Anschlussmittels,
- Fig. 11: eine Draufsicht auf das Anschlussmittel,
- Fig. 12: ein Schnitt B-B durch das Anschlussmittel aus Fig. 11,
- Fig. 13: ein Schnitt A-A durch das Anschlussmittel aus Fig. 11,
- Fig. 14: ein vergrößerter Ausschnitt G aus Fig. 13,
- Fig. 15: eine Stirnansicht auf einen Isolierstoffkörper mit einem Haltemittel,
- Fig. 16: einen vergrößerten Ausschnitt aus Fig. 15,
- Fig. 17: eine Explosionsdarstellung und
- Fig. 18: ein Montagehilfsmittel.

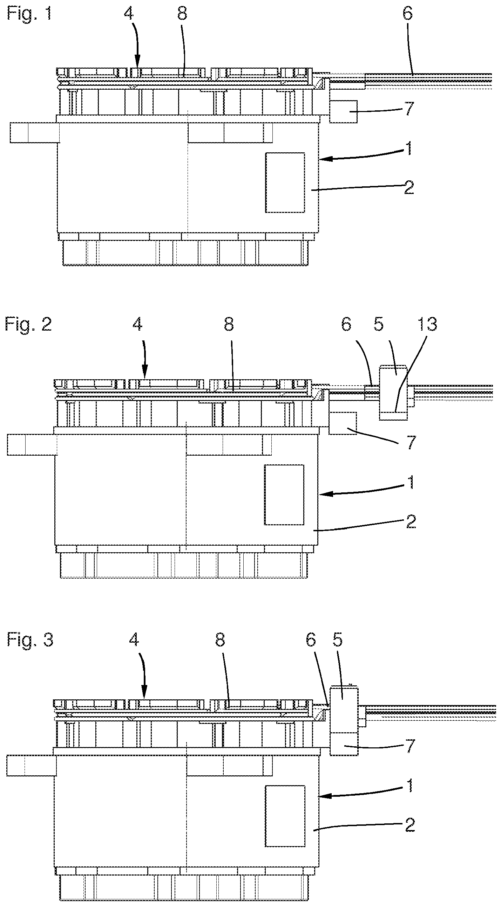

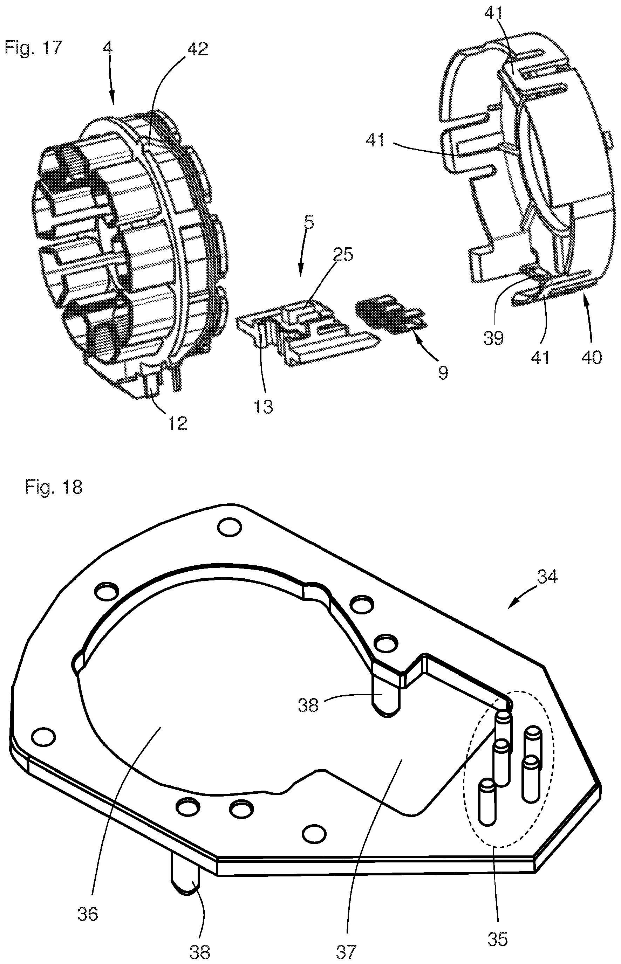

Fig. 1 zeigt einen bewickelten Stator 1 in einer ersten Phase eines Montageprozesses, mit einem geschlossenen Rückschlussring 2, einem Isolierstoffkörper 4 mit einem Haltemittel 7, einen Wicklungsdraht 6, welcher um die einzelnen radial nach innen weisenden Pole des Stators gewickelt (hier nicht erkennbar) und zwischen den einzelnen Polen in Drahtführungsrillen 8 des Isolierstoffkörpers 4 am Umfang des Stators geführt sind. Der Wicklungsdraht 6 ist radial nach außen an einem Anschlagmittel 5 eines Montagehilfsmittels 34 (siehe Fig. 18) fixiert.

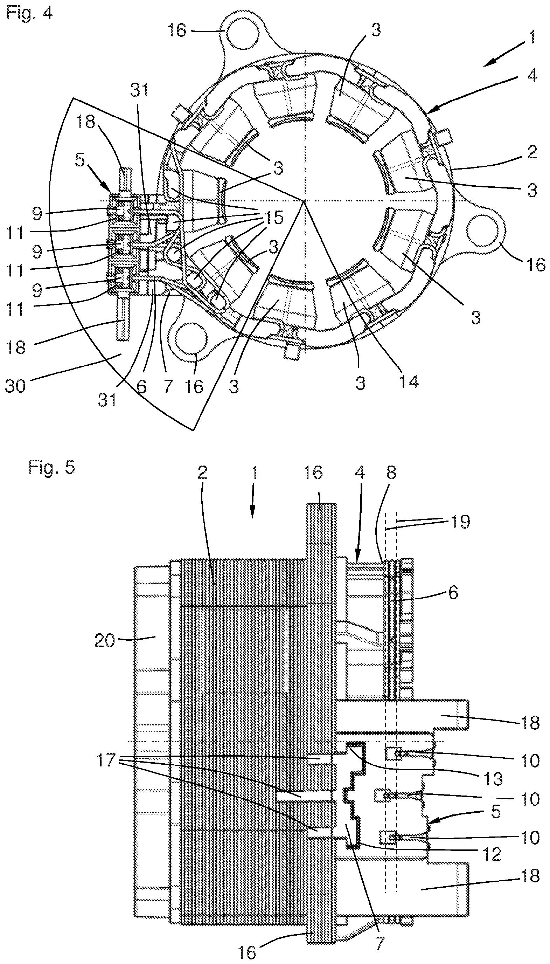

Fig. 2 zeigt den Stator 1 aus Fig. 1 in einer zweiten Phase des Montageprozesses, wobei Drahtaufnahmen 10 (siehe Fig. 5) eines Anschlussmittels 5 mit mehreren Drahtabschnitten des Wicklungsdrahtes 6 kämmen und das Anschlussmittel 5 vom Isolierstoffkörper 4 getrennt ist. Das Haltemittel 7 weist eine Führung 12 (siehe Fig. 5) auf, in welche das Anschlussmittel 5 mit einer Gegenkontur 13 aufschiebbar ist, wobei die Drähte in den Drahtaufnahmen entlang der Drahterstreckungsrichtung gleitbar angeordnet sind.

Fig. 3 zeigt den Stator 1 aus den Fig. 1 und 2 in einer dritten Phase des Montageprozesses, in welchem das Anschlussmittel 5 mit dem Haltemittel 7 verbunden ist. In diesem Zustand besteht eine formschlüssige Verbindung in achsparalleler Richtung. Die Führung ist so dimensioniert, dass eine reibschlüssige Verbindung in radialer Richtung besteht.

Fig. 4 zeigt den bewickelten Stator 1 in einer Axialansicht. Hier sind die Statorpole 3 und die Verlegung des Wicklungsdrahtes 6 zu erkennen. Dieser ist um Drahtführungsmittel 15 gefügt, wobei der Draht teilweise auch nach innen in einen Wicklungsaufnahmebereich des Stators 1 und zurück geführt wird, um den Draht an die gewünschte Position am Anschlussmittel 5 zu verlegen. Hierzu sind zusätzlich auch Umlenkmittel 31 vorgesehen. Die Drahtführungsmittel 15, welche für die Anordnung der Wicklungsdrähte im Anschlussbereich dienen, sind in einem 90°-Winkelsektor 30 angeordnet, in welchem das Anschlussmittel 5 vollständig enthalten ist. Das Anschlussmittel 5 ist am Isolierstoffkörper 4 montiert und weist drei Schneid-Klemm-Kontakte 9 auf, die in Aufnahmeschächten 11 des Anschlussmittels 5 axial (parallel zur Motorachse 14) gefügt sind. Das Anschlussmittel 5 ist an einem Haltemittel 7 annähernd radial aufgeschoben. Die Schneid-Klemm-Kontakte 9 dienen bis zur Endmontage als Verliersicherung in radialer Richtung. In Axialrichtung besteht ein Formschluss zwischen Anschlussmittel 5 und Haltemittel 7.

Fig. 5 zeigt eine Draufsicht auf den bewickelten Stator 1, mit dem Rückschlussring 2, dem Isolierstoffkörper 4, dem Anschlussmittel 5 und dem Wicklungsdraht 6. Der magnetisch aktive Teil des Stators 1 besteht aus einem Blechstapel. Mehrere benachbarte Bleche dieses Blechstapels sind radial an drei Stellen erweitert und bilden Befestigungsaugen 16 (siehe auch Fig. 4) für eine Verschraubung mit einem Gehäuse. Der Isolierstoffkörper 4 weist mehrere Drahtführungsrillen 8 auf, in welchen der Wicklungsdraht 6 außen am Umfang des Isolierstoffkörpers 4 verlegt ist. Nutauskleidungen (hier nicht erkennbar) als Teil des Isolierstoffkörpers 4 ragen in Nuten des Stators 1 ein. Weiter zu erkennen ist das mit dem Isolierstoffkörper 4 einstückige Haltemittel 7 mit der Führung 12, an welchem radial formschlüssig das Anschlussmittel 5 aufgeschoben ist, mit der Gegenkontur 13. Das Haltemittel weist weiter Abstützmittel 17 auf, mit welchen sich das Haltemittel 7 am Rückschlussring 2 abstützt. Das Anschlussmittel 5 weist Führungsmittel 18 auf, welche zur Führung eines Anschlusssteckers dienen. Zur leichteren Montage sind die Führungsmittel 18 mit Einführschrägen versehen. Die Führungsmittel 18 springen axial deutlich weiter vor als das Anschlussmittel, weshalb die Montage des Anschlusssteckers erleichtert ist. Das Anschlussmittel 5 weist schlitzartige Drahtaufnahmen 10 auf, welche unterschiedlich tief in das Anschlussmittel 5 eingeformt sind, so dass die darin eingelegten Drahtabschnitte des Wicklungsdrahts 6 auf unterschiedlichen Niveaus liegen. Wie gestrichelte Linien 19 verdeutlichen, sind die unterschiedlichen Niveaus an die axiale Lage der Drahtführungsrillen 8 angepasst. Diese geometrische Besonderheit dient dazu den Wicklungsdraht 6 möglichst platzsparend zu verlegen. Auf der gegenüberliegenden Seite des Stators 1 ist eine Isolierendscheibe 20 montiert, welche keine zusätzlichen Drahtführungskonturen aufweist.

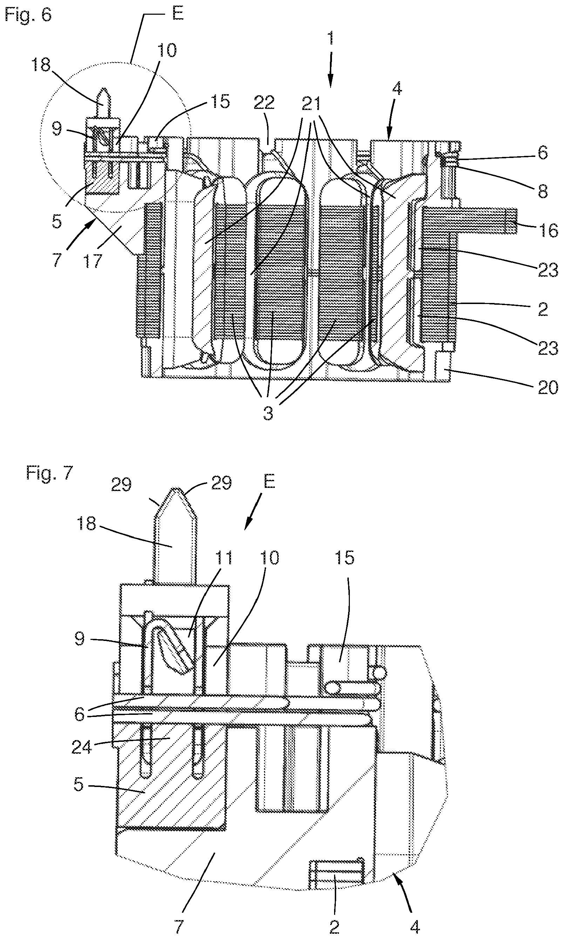

Fig. 6 zeigt eine Schnittansicht des bewickelten Stators 1, mit dem Rückschluss 2, dem Befestigungsauge 16, den Statorpolen 3, dem Isolierstoffkörper 4, der Isolierendscheibe 20, mehreren Statorspulen 21, dem Anschlussmittel 5 und dem in den Drahtführungsrillen 8 und in der Drahtaufnahme 10 des Anschlussmittels 5 aufgenommenen Wicklungsdraht 6. Der Isolierstoffkörper 4 und die Isolierendscheibe 20 weisen Nutauskleidungen 23 auf. Weiter sind im Isolierstoffkörper 4 Drahtdurchgänge 22 eingeformt, durch welche der Wicklungsdraht 6 von den Drahtführungsrillen 8 zu den Statorpolen 3 und zurück und von den Drahtführungsmitteln 15 zu den Statorpolen 3 oder zum Anschlussmittel 5 geführt sind. Durch die Abstützmittel 17 kann Fügekraft beim Einstecken eines Anschlusssteckers aufgenommen werden.

Die weiteren Einzelheiten zeigt deutlicher die vergrößerte Einzelheit E (Fig. 7), mit dem Isolierstoffkörper 4, dem Rückschlussring 2, dem Haltemittel 7, dem Anschlussmittel 5, dem Drahtführungsmittel 15 und dem Wicklungsdraht 6. Wie deutlich zu erkennen, sind zwei Drähte 6 in der schlitzartigen Drahtaufnahme 10 aufgenommen. Dabei handelt es sich um einen von dem Anschlussmittel 5 wegverlegten Draht und einen zum Anschlussmittel zurückverlegten Draht. Im Aufnahmeschacht 11 ist rechtwinklig zur Drahterstreckungsrichtung der Schneid-Klemm-Kontakt 9 gefügt, der zur Aufnahme einer Kontaktzunge eines Anschlusssteckers dient und entsprechend geformt ist. Wie nicht zu erkennen ist verkrallen sich Widerhaken des Schneid-Klemm-Kontakts 9 in den Begrenzungsflächen des Aufnahmeschachts 11. Ein Anschlagmittel 24 ist innerhalb der Drahtaufnahme 10 mitgeformt und dient zur Festlegung des Niveaus, auf welchem die Wicklungsdrähte 6 die Drahtaufnahme 10 queren. Schließlich ist das Führungsmittel 18 erkennbar, das für die einfachere Montage des Anschlusssteckers mit Schrägen 29 versehen ist.

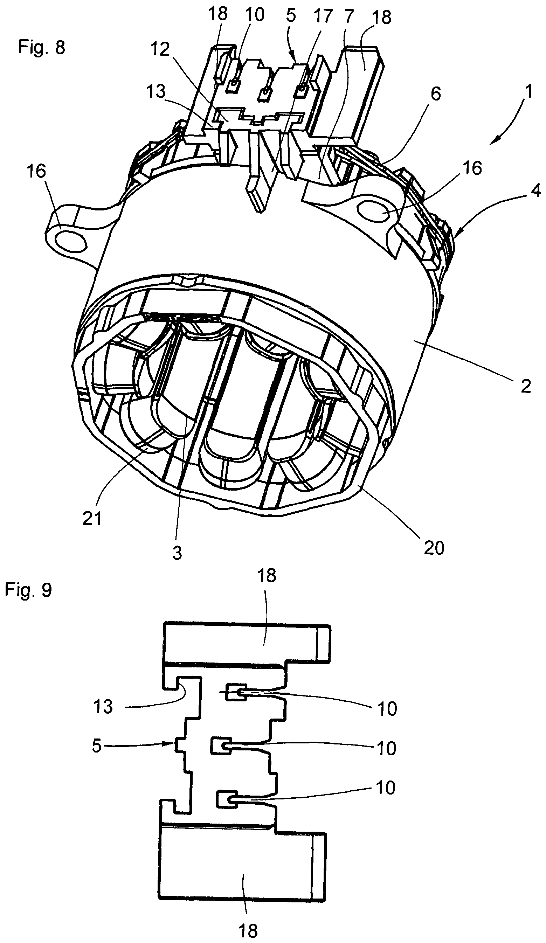

Fig. 8 zeigt eine dreidimensionale Ansicht des bewickelten Stators 1, mit dem Rückschlussring 2, der Isolierendscheibe 20, dem Isolierstoffkörper 4, den Statorpolen 3, den Wicklungsdrähten 6 und dem Anschlussmittel 5. Deutlich sind die Abstützmittel 17 des Haltemittels 7 und die Führung 12, sowie die Gegenkontur 13 des Anschlussmittels 5 zu erkennen. Weiter sind gezeigt die Statorspulen 21, die Befestigungsaugen 16, die Drahtaufnahmen 10 und die Führungsmittel 18.

Fig. 9 zeigt eine Einzelteildarstellung eines Anschlussmittels 5, mit den Drahtaufnahmen 10, den Gegenkonturen 13, welche einer Kulissenführung ähneln und die Führungsmittel 18, welche unterschiedlich breit ausgeführt sind. Die Drahtaufnahmen sind mit Einführschrägen zur leichteren Drahtmontage versehen. Die Schlitzbreite der Drahtaufnahme 10 ist jedoch an die Drahtstärke angepasst und ist deutlich geringer als eine Wickelnadel einer Nadelwickelmaschine, mit welcher die Wicklung gefertigt ist.

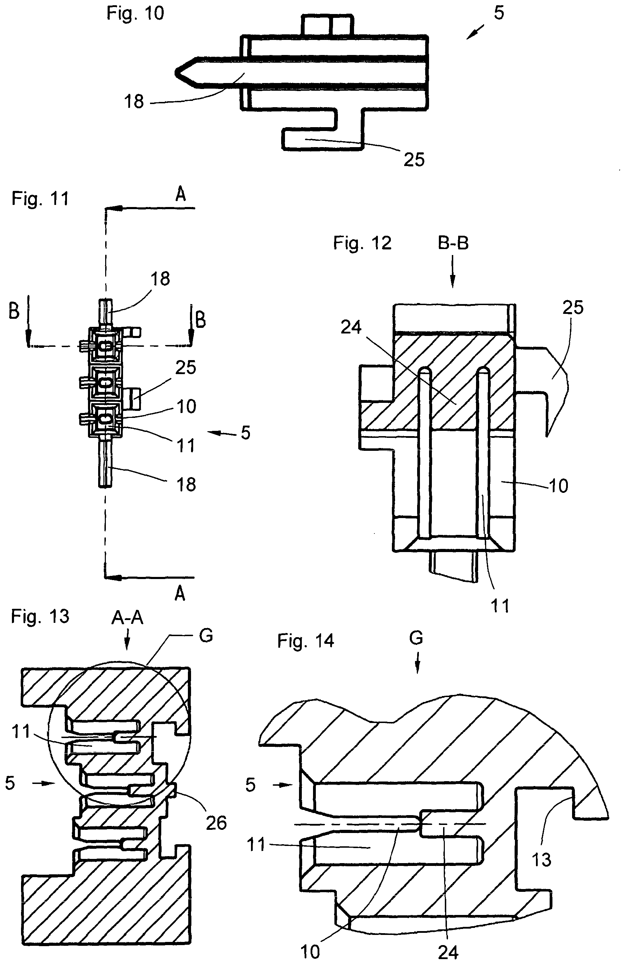

Fig. 10 zeigt eine Seitenansicht des Anschlussmittels 5, mit dem Führungsmittel 18 und einem Verriegelungsmittel 25, welches zur Aufnahme eines Gehäusedeckelabschnitts dient, durch welchen das Anschlussmittel 5 in Axialrichtung zusätzlich formschlüssig fixiert ist.

Fig. 11 stellt eine Draufsicht auf das Anschlussmittel 5 dar, mit dem Verriegelungsmittel 25, den Aufnahmeschächten 11, den Drahtaufnahmen 10 und den Führungsmitteln 18.

Fig. 12 zeigt einen Schnitt B-B durch das Anschlussmittel 5 aus Fig. 11, mit dem Verriegelungsmittel 25, dem Anschlagmittel 24, der Drahtaufnahme 10 und dem Aufnahmeschacht 11.

Fig. 13 zeigt einen Schnitt A-A durch das Anschlussmittel 5 aus Fig. 11, mit einem Aufnahmeschacht 11 und einer rippenartigen Zusatzführung 26.

Ein vergrößerter Ausschnitt G aus Fig. 13, zeigt in Fig. 14 deutlicher die Einzelheiten des Anschlussmittels 5, mit dem Aufnahmeschacht 11, der Drahtaufnahme 10, dem Anschlagmittel 24 und der Gegenkontur 13.

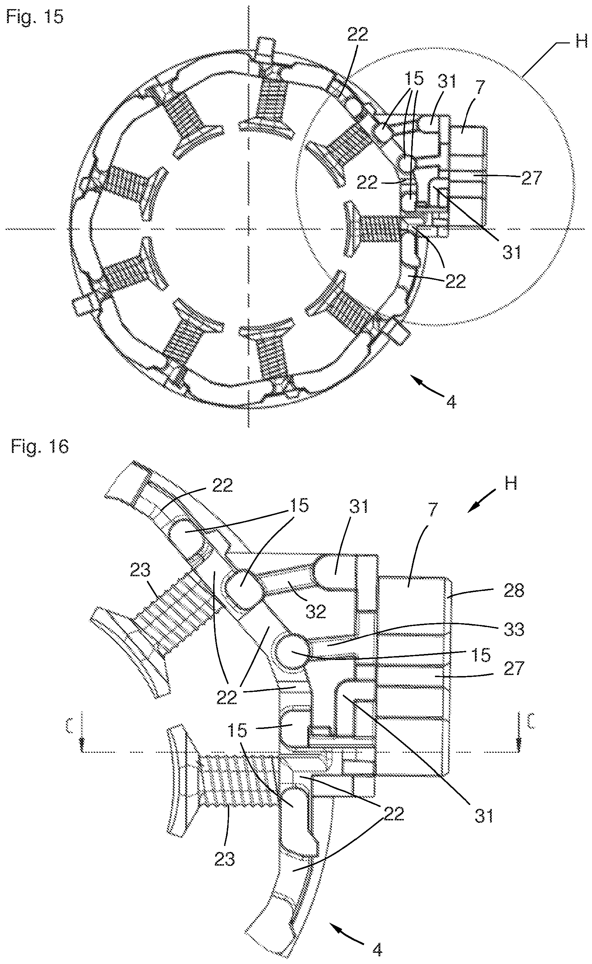

Fig. 15 zeigt eine Stirnansicht auf den Isolierstoffkörper 4 mit dem Haltemittel 7, welches mit einer Zusatznut 27 zur Aufnahme der Zusatzführung 26 (siehe Fig. 13) versehen ist. Weiter sind die Drahtführungsmittel 15 gezeigt, die als axial vorspringende Zapfen ausgebildet sind, sowie die Drahtdurchgänge 22 zwischen einem radial äußeren und einem radial inneren Statorbereich. Umlenkmittel 31 radial außerhalb des Rückschlussrings 2 dienen zur Umlenkung eines Wicklungsdrahtabschnitts für die beiden radial am weitesten entfernten Drahtaufnahmen 10. Bei der dritten Drahtaufnahme 10 ist kein zusätzliches Umlenkmittel 31 erforderlich.

Fig. 16 zeigt einen vergrößerten Ausschnitt H aus Fig. 15, mit dem Isolierstoffkörper 4, dem Haltemittel 7, der Zusatznut 27, den Drahtführungsmitteln 15, dem Umlenkmittel 31, den Drahtdurchgängen 22 und den Nutauskleidungen 23, welche auch Stirnseiten der Statorpole 3 isolieren. Zur leichteren Montage des Anschlussmittels 5 sind am Haltemittel 7 Fasen 28 vorgesehen. Am Haltemittel 7 radial außerhalb des Rückschlussrings 2 sind ein erster Tiefenanschlag 32 und ein zweiter Tiefenanschlag 33 vorgesehen, welche die Höhenlage des Wicklungsdrahts 6 (in Axialrichtung) begrenzen. Hierbei ist zu beachten, dass in der Regel zwei Wicklungsdrähte 6 übereinander gelegt sind und daher unterschiedliche Höhenniveaus einnehmen. Auch Kreuzungspunkte müssen mit Hilfe der Drahtführungsmittel 15 und den weiteren Umlenkmitteln 31 so geführt sein, dass ein unerwünschter Höhenaufbau vermieden wird.

Fig. 17 zeigt eine Explosionsdarstellung von einzelnen Teilen des Elektromotors, mit dem Isolierstoffkörper 4, dem Anschlussmittel 5, mit dem Verriegelungsmittel 25, mit Schneid-Klemm-Kontakten 9 und einem Gehäusedeckel 40, an dessen Rand ein Verriegelungslappen 39 achsparallel vorspringt. Dieser Verriegelungslappen 39 ist an das Verriegelungsmittel 25 angepasst und geht im montierten Zustand mit diesem einen Formschluss ein. Dadurch wird verhindert, dass das Anschlussmittel 5 mit seiner Gegenkontur 13 radial aus der Führung 12 des Isolierstoffkörpers 4 rutschen kann. Der Gehäusedeckel 40 ist topfförmig ausgebildet und weist an seinem Topfrand Schnappmittel 41 auf, welche mit korrespondierenden Schnappnasen 42 des Isolierstoffkörpers 4 verrastbar sind.

Fig. 18 zeigt ein Montagehilfsmittel 34, mit einer Statoraufnahme 36 mit Anschlussaufnahmebereich 37 und mit Anschlagstellen 35, die hier als Anschlagstifte ausgeführt sind. Das Montagehilfsmittel 34 ist weiter mit Justierstiften 38 versehen, welche zur Ausrichtung des Stators in der Wickelvorrichtung und in einem Werkstückträger dienen.

### Bezugszeichenliste

| | | | |
|---|---|---|---|
| 1 | Stator | 33 | Zweiter Tiefenanschlag |
| 2 | Rückschlussring | 34 | Montagehilfsmittel |
| 3 | Statorpol | 35 | Anschlagstelle |
| 4 | Isolierstoffkörper | 36 | Statoraufnahme |
| 5 | Anschlussmittel | 37 | Anschlussaufnahmebereich |
| 6 | Wicklungsdraht | 38 | Justierstift |
| 7 | Haltemittel | 39 | Verriegelungslappen |
| 8 | Drahtführungsrille | 40 | Gehäusedeckel |
| 9 | Schneid-Klemm-Kontakt | 41 | Schnappmittel |
| 10 | Drahtaufnahmen | 42 | Schnappnase |
| 11 | Aufnahmeschacht | | |
| 12 | Führung | | |
| 13 | Gegenkontur | | |
| 14 | Motorachse | | |
| 15 | Drahtführungsmittel | | |
| 16 | Befestigungsauge | | |
| 17 | Abstützmittel | | |
| 18 | Führungsmittel | | |
| 19 | Gestrichelte Linie | | |
| 20 | Isolierendscheibe | | |
| 21 | Statorspule | | |
| 22 | Drahtdurchgang | | |
| 23 | Nutauskleidung | | |
| 24 | Anschlagmittel | | |
| 25 | Verriegelungsmittel | | |
| 26 | Zusatzführung | | |
| 27 | Zusatznut | | |
| 28 | Fase | | |
| 29 | Schräge | | |
| 30 | Winkelsektor | | |
| 31 | Umlenkmittel | | |
| 32 | erster Tiefenanschlag | | |

## Patentansprüche

1. Verfahren zur Herstellung eines Stators (1) eines elektronisch kommutierten Gleichstrommotors mit einem Motorachse (14), einem mehrphasigen Stator (1) und einem Innenrotor, wobei der Stator (1) einen geschlossenen Rückschlussring (2) und eine Vielzahl von mit diesem einstückigen, nach innen gerichteten Statorpolen (3) und einen Isolierstoffkörper (4) mit einem sich radial über den Statoraußendurchmesser erstreckenden Anschlussmittel (5) für einen Wicklungsdraht (6) aufweist, **dadurch gekennzeichnet**, in dass das Anschlussmittel (5) nicht einstückig mit dem Isolierstoffkörper (4) ist, sondern an einem mit dem Isolierstoffkörper (4) einstückigen Haltemittel (7) montiert ist, und **dadurch gekennzeichnet durch** folgende Verfahrensschritte
- Bereitstellen eines Montagehilfsmittels (34) zum Anschlagen der Wicklungsdrähte (6),
- Bereitstellen eines isolierten Stators (1),
- Einlegen des isolierten Stators (1) in das Montagehilfsmittel (34),
- Einlegen dieser Anordnung in eine Wickelvorrichtung,
- Anschlagen eines Wicklungsdrahtes (6) an einer radial außerhalb des Stators (1) angeordneten Anschlagstelle (35) des Montagehilfsmittels (34),
- Fügen des Drahtes einer ersten Phase um nacheinander einen ersten bis zu einem n-ten Pol des Stators (1),
- Führen des Drahtes zu einer zweiten Anschlagstelle des Montagehilfsmittels (34) und Anschlagen des Drahtes an diese zweite Anschlagstelle,
- unterbrechungsloses Fügen desselben Drahtes als zweite Phase um nacheinander einen ersten bis zu einem n-ten weiteren Pol des Stators (1),
- Führen des Drahtes zu einer dritten Anschlagstelle des Montagehilfsmittels (34) und Anschlagen des Drahtes an diese dritte Anschlagstelle,
- unterbrechungsloses Fügen desselben Drahtes als dritte Phase um nacheinander einen ersten bis zu einem n-ten weiteren Pol des Stators (1),
- Führen des Drahtes zu der ersten Anschlagstelle und Anschlagen an diese,
- Fügen in achsparalleler Richtung von schlitzartigen Drahtaufnahmen (10) des Anschlussmittels (5) in parallel angeordneten Wicklungsdrahtabschnitte zwischen Isolierstoffkörper (4) und den Anschlagstellen (35) des Montagehilfsmittels (34) rechtwinklig zur Drahterstreckung,
- Aufschieben einer Gegenkontur (13) des Anschlussmittels (5) durch eine Radialbewegung auf das Haltemittel (7) in eine Führung (12) des Haltemittels (7) sodass die Verbindung des Anschlussmittels (5) an dem Haltemittel (7) in achsparalleler Richtung formschlüssig ist,
- Fügen der Schneid-Klemm-Kontakte (9), Schweiß- oder Lötkontakte in achsparalleler Richtung in Aufnahmeschächte (11) des Anschlussmittels (5),
- Abtrennen der Drahtabschnitte radial außerhalb des Anschlussmittels (5), z. B. durch eine Klinge.

2. Verfahren zur Herstellung eines Stators (1) nach Anspruch 1, **gekennzeichnet durch** den Verfahrensschritt: Montage eines Verriegelungslappens (39) an den Stator (1) und Verriegeln des Anschlussmittels (5) durch Formschluss.

3. Verfahren zur Herstellung eines Stators (1) nach Anspruch 1, **gekennzeichnet durch** den Verfahrensschritt: Montage eines Gehäusedeckels (40) mit einem damit einstückigen Verriegelungslappens (39) an den Stator (1) und Verriegeln des Anschlussmittels (5) durch Formschluss.

4. Elektronisch kommutierter Gleichstrommotor mit einem Motorachse (14), einem mehrphasigen Stator (1) und einem Innenrotor, wobei der Stator (1) einen geschlossenen Rückschlussring (2) und eine Vielzahl von mit diesem einstückigen, nach innen gerichteten Statorpolen (3) und einen Isolierstoffkörper (4) mit einem sich radial über den Statoraußendurchmesser erstreckenden Anschlussmittel (5) für einen Wicklungsdraht (6) aufweist, **dadurch gekennzeichnet, dass** das Anschlussmittel (5) nicht einstückig mit dem Isolierstoffkörper (4) ist, sondern an einem mit dem Isolierstoffkörper (4) einstückigen Haltemittel (7) montiert ist, wobei das Anschlussmittel (5) schlitzartige Drahtaufnahmen (10) aufweist, in welchen die darin aufgenommenen radial nach außen geführten Wicklungsdrahtabschnitte sich nicht verklemmen können, wobei das Anschlussmittel (5) rechtwinklig zu den Drahtaufnahmen (10) ausgerichtete Aufnahmeschächte (11) für Schneid-Klemm-Kontakte (9), Schweiß- oder Lötkontakte aufweist und das Haltemittel (7) eine Führung (12) aufweist, in welche das Anschlussmittel (5) mit einer Gegenkontur (13) durch eine Radialbewegung auf das Haltemittel (7) aufschiebbar ist, sodass die Verbindung des Anschlussmittels (5) an dem Haltemittel (7) in achsparalleler Richtung formschlüssig ist.

5. Elektronisch kommutierter Gleichstrommotor nach Anspruch 4, **dadurch gekennzeichnet, dass** die Verbindung des Anschlussmittels (5) an dem Haltemittel (7) durch einen Verriegelungslappen (39) verriegelt ist.

6. Elektronisch kommutierter Gleichstrommotor nach Anspruch 5, **dadurch gekennzeichnet, dass** der Verriegelungslappen (39) mit einem Gehäuseteil, z. B. einem Gehäusedeckel (40) des Gleichstrommotors einstückig ist.

7. Elektronisch kommutierter Gleichstrommotor einem der Ansprüche 4 bis 6, **dadurch gekennzeichnet, dass** zum Umlenken des Wicklungsdrahtes (6) mehrere Drahtführungsmittel (15) in einem Ringbereich des Isolierstoffkörpers (4), welcher eine axiale Projektion des Rückschlussringes (2) auf den Isolierstoffkörper (4) darstellt und in einem 90°-Winkelsektor (30), in welchem das Anschlussmittel (5) vollständig enthalten ist, angeordnet und mit dem Isolierstoffkörper (4) einstückig sind.

8. Elektronisch kommutierter Gleichstrommotor nach Anspruch 7, **dadurch gekennzeichnet, dass** weitere Umlenkmittel (31) radial außerhalb dieses Ringbereiches am Haltemittel (7) des Isolierstoffkörpers (4) vorgesehen sind.

9. Elektronisch kommutierter Gleichstrommotor nach Anspruch 8, **dadurch gekennzeichnet, dass** in dem Winkelsektor (30) der Wicklungsdraht (6) zumindest einmal nach innen axial vor einen bereits bewickelten Statorpol (3) um ein Drahtführungsmittel (15) geführt ist.

10. Elektronisch kommutierter Gleichstrommotor nach Anspruch 8, **dadurch gekennzeichnet, dass** in dem Winkelsektor (30) der Wicklungsdraht (6) zumindest zweimal nach innen axial vor einen bereits bewickelten Statorpol (3) um ein jeweils unterschiedliches Drahtführungsmittel (15) geführt ist.

11. Elektronisch kommutierter Gleichstrommotor nach Anspruch 8, **dadurch gekennzeichnet, dass** der Wicklungsdraht (6) Zick-Zack-artig um zumindest zwei Drahtführungsmittel (15) herumgelegt ist.

12. Elektronisch kommutierter Gleichstrommotor nach Anspruch 4, **dadurch gekennzeichnet, dass** kein Drahtführungsmittel (15) vorhanden ist, welches in achsparalleler Richtung wirkende Rückhaltegeometrien aufweist.

## Claims

1. Method for producing a stator (1) of an electronically commutated DC motor having a motor axis (14), a multi-phase stator (1) and an internal rotor, wherein the stator (1) has a closed return ring (2) and a plurality of inwardly directed stator poles (3) formed in one piece therewith and an insulating material body (4) having a connection means (5) for a winding wire (6), said connection means extending radially beyond the external diameter of the stator, **characterized in that** the connection means (5) is not formed in one piece with the insulating material body (4) but is instead mounted on a holding means (7) formed in one piece with the insulating material body (4), and **characterized by** the following method steps:
- providing an assembly aid (34) for attaching the winding wires (6),
- providing an insulated stator (1),
- inserting the insulated stator (1) into the assembly aid (34),
- inserting this arrangement into a winding device,
- attaching a winding wire (6) to an attachment point (35) of the assembly aid (34), said attachment point being arranged radially outside of the stator (1),
- placing the wire of a first phase around successively a first to nth pole of the stator (1),
- guiding the wire to a second attachment point of the assembly aid (34) and attaching the wire to this second attachment point,
- uninterruptedly placing the same wire, as a second phase, around successively a first to nth further pole of the stator (1),
- guiding the wire to a third attachment point of the assembly aid (34) and attaching the wire to this third attachment point,
- uninterruptedly placing the same wire, as a third phase, around successively a first to nth further pole of the stator (1),
- guiding the wire to the first attachment point and attaching it thereto,
- placing, in a direction parallel to the axis, slot-like wire receptacles (10) of the connection means (5) in parallel winding wire sections between the insulating material body (4) and the attachment points (35) of the assembly aid (34), perpendicular to the extension of the wire,
- pushing a mating contour (13) of the connection means (5) into a guide (12) of the holding means (7) by a radial movement towards the holding means (7) so that the connection means (5) is connected to the holding means (7) with a form fit in a direction parallel to the axis,
- placing the insulation displacement contacts (9), welding contacts or soldering contacts in receiving shafts (11) of the connection means (5) in a direction parallel to the axis,
- cutting off the wire sections radially outside of the connection means (5), for example by means of a blade.

2. Method for producing a stator (1) according to claim 1, **characterized by** the method step: mounting a locking tab (39) on the stator (1), and locking the connection means (5) with a form fit.

3. Method for producing a stator (1) according to claim 1, **characterized by** the method step: mounting on the stator (1) a housing cover (40) that has a locking tab (39) formed in one piece therewith, and locking the connection means (5) with a form fit.

4. Electronically commutated DC motor having a motor axis (14), a multi-phase stator (1) and an internal rotor, wherein the stator (1) has a closed return ring (2) and a plurality of inwardly directed stator poles (3) formed in one piece therewith and an insulating material body (4) having a connection means (5) for a winding wire (6), said connection means extending radially beyond the external diameter of the stator, **characterized in that** the connection means (5) is not formed in one piece with the insulating material body (4) but is instead mounted on a holding means (7) formed in one piece with the insulating material body (4), wherein the connection means (5) has slot-like wire receptacles (10) in which the radially outwardly guided winding wire sections received therein cannot become jammed, wherein the connection means (5) has receiving shafts (11) for insulation displacement contacts (9), welding contacts or soldering contacts, said receiving shafts being oriented perpendicular to the wire receptacles (10), and the holding means (7) has a guide (12), into which the connection means (5) having a mating contour (13) can be pushed by a radial movement towards the holding means (7) so that the connection means (5) is connected to the holding means (7) with a form fit in a direction parallel to the axis.

5. Electronically commutated DC motor according to claim 4, **characterized in that** the connection of the connection means (5) to the holding means (7) is locked by a locking tab (39).

6. Electronically commutated DC motor according to claim 5, **characterized in that** the locking tab (39) is formed in one piece with a housing part, for example a housing cover (40) of the DC motor.

7. Electronically commutated DC motor according to any one of claims 4 to 6, **characterized in that**, in order to divert the winding wire (6), a plurality of wire guide means (15) are arranged in an annular region of the insulating material body (4) that constitutes an axial projection of the return ring (2) onto the insulating material body (4) and in a 90° angle sector (30) in which the connection means (5) is fully contained, and is formed in one piece with the insulating material body (4).

8. Electronically commutated DC motor according to claim 7, **characterized in that** further diverting means (31) are provided radially outside of this annular region on the holding means (7) of the insulating material body (4).

9. Electronically commutated DC motor according to claim 8, **characterized in that**, in the angle sector (30), the winding wire (6) is guided at least once around a wire guide means (15) axially inwards before an already wound stator pole (3).

10. Electronically commutated DC motor according to claim 8, **characterized in that**, in the angle sector (30), the winding wire (6) is guided at least twice around in each case a different wire guide means (15) axially inwards before an already wound stator pole (3).

11. Electronically commutated DC motor according to claim 8, **characterized in that** the winding wire (6) is wrapped in a zigzag manner around at least two wire guide means (15).

12. Electronically commutated DC motor according to claim 4, **characterized in that** there is no wire guide means (15) that has retaining geometries acting in a direction parallel to the axis.

## Revendications

1. Procédé de fabrication d'un stator (1) d'un moteur à courant continu commuté électroniquement avec un arbre moteur (14), un stator (1) multiphase et un rotor intérieur,
dans lequel le stator (1) présente une bague de reflux (2) fermée et une pluralité de pôles statoriques (3) d'une seule pièce avec celui-ci et dirigés vers l'intérieur et un corps de matériau isolant (4) avec un moyen de raccordement (5), s'étendant radialement par-dessus le diamètre extérieur de stator, pour un fil d'enroulement (6), **caractérisé en ce que** le moyen de raccordement (5) n'est pas d'une seule pièce avec le corps de matériau isolant (4) mais est monté contre un moyen de retenue (7) d'une seule pièce avec le corps de matériau isolant (4), **caractérisé par** les étapes de procédé suivantes :
- fourniture d'un moyen d'aide au montage (34) pour la pose des fils d'enroulement (6),
- fourniture d'un stator (1) isolé,
- insertion du stator (1) isolé dans le moyen d'aide au montage (34),
- insertion de cet agencement dans un dispositif d'enroulement,
- pose d'un fil d'enroulement (6) contre un emplacement de pose (35), agencé radialement à l'extérieur du stator (1), du moyen d'aide au montage (34),
- ajout du fil d'une première phase autour successivement d'un premier à un n^{e} pôle du stator (1),
- guidage du fil vers un deuxième emplacement de pose du moyen d'aide au montage (34) et pose du fil contre ce deuxième emplacement de pose,
- ajout sans interruption du même fil en tant que deuxième phase autour successivement d'un premier pôle à un n^{e} autre pôle du stator (1),
- guidage du fil vers un troisième emplacement de pose du moyen d'aide au montage (34) et pose du fil contre ce troisième emplacement de pose,
- ajout sans interruption du même fil en tant que troisième phase autour successivement d'un premier pôle à un n^{e} autre pôle du stator (1),
- guidage du fil vers le premier emplacement de pose et pose contre celui-ci,
- ajout, dans une direction parallèle à l'arbre, de réceptions de fil (10) en forme de fente du moyen de raccordement (5) dans des sections de fil d'enroulement agencées en parallèle entre le corps de matériau isolant (4) et les emplacements de pose (35) du moyen d'aide au montage (34), à angle droit par rapport à l'extension de fil,
- repoussée d'un contour extérieur (13) du moyen de raccordement (5) jusque sur le moyen de retenue (7) par un mouvement radial, jusque dans un guidage (12) du moyen de retenue (7) de sorte que la liaison du moyen de raccordement (5) contre le moyen de retenue (7) soit par coopération de forme dans une direction parallèle à l'arbre,
- ajout des contacts à pince coupante (9), des contacts à souder ou à braser dans une direction parallèle à l'arbre dans des puits de réception (11) du moyen de raccordement (5),
- détachement des sections de fil radialement à l'extérieur du moyen de raccordement (5), par exemple au moyen d'une lame.

2. Procédé de fabrication d'un stator (1) selon la revendication 1, **caractérisé par** l'étape de procédé : montage d'une patte de verrouillage (39) contre le stator (1) et verrouillage du moyen de raccordement (5) par coopération de forme.

3. Procédé de fabrication d'un stator (1) selon la revendication 1, **caractérisé par** l'étape de procédé : montage d'un couvercle de logement (40), avec une patte de verrouillage (39) d'une seule pièce avec celui-ci, contre le stator (1) et verrouillage du moyen de raccordement (5) par coopération de forme.

4. Moteur à courant continu commuté électroniquement avec un arbre moteur (14), un stator (1) multiphase et un rotor intérieur, dans lequel le stator (1) présente une bague de reflux (2) fermée et une pluralité de pôles statoriques (3) d'une seule pièce avec celui-ci et dirigés vers l'intérieur et un corps de matériau isolant (4) avec un moyen de raccordement (5), s'étendant radialement par-dessus le diamètre extérieur de stator, pour un fil d'enroulement (6), **caractérisé en ce que** le moyen de raccordement (5) n'est pas d'une seule pièce avec le corps de matériau isolant (4) mais est monté contre un moyen de retenue (7) d'une seule pièce avec le corps de matériau isolant (4), dans lequel le moyen de raccordement (5) présente des réceptions de fil (10) en forme de fente dans lesquelles les sections de fil d'enroulement qui y sont reçues et guidées radialement vers l'extérieur ne peuvent pas se coincer, dans lequel le moyen de raccordement (5) présente des puits de réception (11) dirigés à angle droit par rapport aux réceptions de fil (10) pour des contacts à pince coupante (9), des contacts à souder ou à braser et le moyen de retenue (7) présente un guidage (12) dans lequel le moyen de raccordement (5) peut être repoussé avec un contour extérieur (13) jusque sur le moyen de retenue (7) par un mouvement radial, de sorte que la liaison du moyen de raccordement (5) contre le moyen de retenue (7) soit par coopération de forme dans une direction parallèle à l'arbre.

5. Moteur à courant continu commuté électroniquement selon la revendication 4, **caractérisé en ce que** la liaison du moyen de raccordement (5) contre le moyen de retenue (7) est verrouillée par une patte de verrouillage (39).

6. Moteur à courant continu commuté électroniquement selon la revendication 5, **caractérisé en ce que** la patte de verrouillage (39) est d'une seule pièce avec une partie de logement, par exemple un couvercle de logement (40) du moteur à courant continu.

7. Moteur à courant continu commuté électroniquement selon l'une des revendications 4 à 6, **caractérisé en ce que** pour réorienter le fil d'enroulement (6) plusieurs moyens de guidage de fil (15) sont agencés dans une zone de bague du corps de matériau isolant (4), lequel représente une projection axiale de la bague de reflux (2) jusque sur le corps de matériau isolant (4) et dans un secteur angulaire de 90° (30) dans lequel le moyen de raccordement (5) est contenu entièrement, et sont d'une seule pièce avec le corps de matériau isolant (4).

8. Moteur à courant continu commuté électroniquement selon la revendication 7, **caractérisé en ce que** d'autres moyens de réorientation (31) sont prévus radialement à l'extérieur de cette zone de bague contre le moyen de retenue (7) du corps de matériau isolant (4).

9. Moteur à courant continu commuté électroniquement selon la revendication 8, **caractérisé en ce que** dans le secteur angulaire (30) le fil d'enroulement (6) est guidé autour d'un moyen de guidage de fil (15) au moins une fois axialement vers l'intérieur avant un pôle statorique (3) déjà enroulé.

10. Moteur à courant continu commuté électroniquement selon la revendication 8, **caractérisé en ce que** dans le secteur angulaire (30) le fil d'enroulement (6) est guidé autour d'un moyen de guidage de fil (15) respectivement différent au moins deux fois axialement vers l'intérieur avant un pôle statorique (3) déjà enroulé.

11. Moteur à courant continu commuté électroniquement selon la revendication 8, **caractérisé en ce que** le fil d'enroulement (6) est disposé en zigzag autour d'au moins deux moyens de guidage de fil (15).

12. Moteur à courant continu commuté électroniquement selon la revendication 4, **caractérisé en ce que** n'est présent aucun moyen de guidage de fil (15) présentant des géométries de soutien agissant dans une direction parallèle à l'arbre.
